# EUROPÄISCHE PATENTANMELDUNG

(11) **EP 4 745 786 A1**
(43) Veröffentlichungstag der Anmeldung: **20.05.2026**
(21) Anmeldenummer: 25216982.6
(22) Anmeldetag: 19.11.2025
(51) Int. Cl.: G06F 11/3668

(54) **VERFAHREN ZUM TESTEN EINES COMPUTERPROGRAMMS**

(30) Priorität: 19.11.2024 DE 102024133800
(71) Anmelder: Deutsches Zentrum für Luft- und Raumfahrt e.V., 53227 Bonn-Oberkassel (DE)
(72) Erfinder: Goetz, Marie, 38104 Braunschweig (DE); Zaeske, Wanja, 38104 Braunschweig (DE)
(74) Vertreter: Gramm, Lins & Partner Patent- und Rechtsanwälte PartGmbB

(57) **Zusammenfassung**

Die Erfindung betrifft ein Verfahren zum Testen eines Computerprogramms mit einer graphischen Benutzeroberfläche, wobei eine Testumgebung mit wenigstens einem Testszenario bereitgestellt wird, welches ein Systemverhalten des zu testenden Computerprogramms mit Bedienung wenigstens eines Bedienelementes der graphischen Benutzeroberfläche beinhaltet, wobei der Testumgebung über die Anzeigeschnittstelle der Datenverarbeitungseinrichtung zusätzlich zu dem ersten Bilddatenstrom für die Anzeigevorrichtung ein zweiter Bilddatenstrom bereitgestellt wird, wobei mittels einer optischen Zeichenerkennung in der über den zweiten Bilddatenstrom bereitgestellten graphischen Benutzeroberfläche durch eine Eingabevorrichtung bedienbare Bedienelemente als ein Objekt der graphischen Benutzeroberfläche erkannt werden, wobei ein Eingabesignal durch die Testumgebung in Abhängigkeit von dem Testszenario und dem erkannten Bedienelement generiert wird, wenn das entsprechende Bedienelement in der graphischen Benutzeroberfläche zuvor erkannt wurde, und wobei das generierte Eingabesignal an der Eingabeschnittstelle der Datenverarbeitungsanlage bereitgestellt wird, um eine simulierte Benutzereingabe zum Testen des Computerprogramms auszulösen.

## Beschreibung

Die Erfindung betrifft ein Verfahren zum Testen eines Computerprogramms, welches eine Ausgabe in Form einer graphischen Benutzeroberfläche erzeugt und auf einer Anzeigevorrichtung ausgibt.

Ein wichtiger Schritt bei der Entwicklung eines Computerprogrammes ist das Testen der spezifizierten Funktionalität. Dabei muss nicht nur überprüft werden, ob das Computerprogramm richtige Berechnungen anstellt und somit beispielsweise in sicherheitskritischen Umgebungen die notwendigen und vor allem korrekten Ausgabedaten liefert, sondern auch die Interaktion zwischen dem Benutzer und der Maschine. Diese Mensch-Maschine-Schnittstelle wird heutzutage durch graphische Benutzeroberflächen bereitgestellt, die es dem Menschen ermöglicht, interaktiv mit der Maschine zu interagieren.

Bei einer solchen Mensch-Maschine-Schnittstelle in Form einer graphischen Benutzeroberfläche werden dabei nicht nur Informationen in Form von statischen oder dynamischen Daten angezeigt, sondern auch die Möglichkeit geschaffen, mithilfe geeigneter Eingabemittel, wie beispielsweise eine Maus, eine Tastatur und/oder sensitives Touchdisplay, mit der graphischen Benutzeroberfläche zu interagieren, umso Eingaben in das Computerprogramm zu tätigen. Solche Eingaben können beispielsweise durch Auswahl vordefinierter Daten oder durch freies Eingeben von Zeichenketten erfolgen.

Nur wenn sowohl funktional die gewünschten Prozesse in der graphischen Benutzeroberfläche abgebildet werden und gleichzeitig auch eine Nutzung durch den Menschen effektiv und effizient erfolgen kann, erfüllt die Benutzeroberfläche ihren Zweck und minimiert Fehleingaben und Fehlbedienungen.

Insbesondere bei der Entwicklung sicherheitskritischer Schnittstellen, wie sie beispielsweise in der Luftfahrt sowie in der Raumfahrt häufig zu finden sind, besteht ein Problem beim Testen der Software darin, dass die Benutzerbedürfnisse, Umgebungsbedingungen und Systemfunktionalitäten den Experten in den jeweiligen Branchen sehr detailliert bekannt sind, diese jedoch keine Expertise im Bereich Softwareentwicklung und Softwaretesten besitzen. Der Softwareentwickler jedoch hat in der Regel keine fundierten Kenntnisse über die Problemstellungen in der jeweiligen Branche und kennt auch die Umgebungsparameter für die jeweiligen sicherheitskritischen Schnittstellen meist nur unzureichend. Es ist daher gewünscht, dass beide Berufsgruppen ihre jeweiligen Kenntnisse und Expertise uneingeschränkt nutzen können, ohne sich auf das jeweilige andere Tätigkeitsfeld vertieft einarbeiten zu müssen.

So lässt sich beispielsweise in der Praxis beobachten, dass Fehler und schlechte Bedienbarkeit bei der Entwicklung neuartiger graphischer Benutzerschnittstellen für Piloten eines Verkehrsflugzeuges von den ersten zwei bis drei Piloten sofort erkannt werden, wodurch die Anzahl der Feedback-Schleifen erhöht und die Akzeptanz bei den Piloten für die Einführung neuartiger Softwareprodukte verringert wird. Darüber hinaus werden hierdurch die Kosten für die Entwicklung und Einführung neuer Softwarekomponenten erhöht.

Es ist in der Praxis bekannt, Software in der Entwicklung automatisch zu testen. Hierfür werden in den Programmcode der zu entwickelnden Software entsprechende, nur für den Ablauf von Testszenarien notwendige Programmelemente integriert, die für die eigentliche zu entwickelnde Software von keinem Nutzen sind. Anschließend können Testszenarien programmiert werden, die dann auf die integrierten Programmelemente zugreifen und hierdurch vorprogrammierte Programmtests durchführen.

Nachteil hierbei ist, dass für das Erstellen der Testszenarien entsprechende Programmelemente hart in den Programmcode integriert werden müssen, was bereits während der Entwicklung des Computerprogramms geschehen muss, wodurch das Entwickeln der Testszenarien auf diese Programmelemente beschränkt sind. Außerdem kann das Erstellen eines Testszenarios nur durch die Programmentwickler erfolgen, sodass die Expertise anderer Berufsgruppen, wie beispielsweise Piloten oder Auftraggeber, sich nur schwer in das Erstellen der Testszenarios integrieren lässt.

Ein weiterer Nachteil dieser Vorgehensweise ist, dass dieser für das spätere Programm nutzloser (toter) Test-Code, der in dem finalen Computerprogramm verbleibt, durch viele Sicherheitsstandards verboten ist oder zusätzlichen Absicherungsmaßnahmen erzwingt. Wenn dieser Test-Code aber nur zum Testen, nicht aber für den Produktivbetrieb einkompiliert wird, so wird nicht genau die Software getestet, die später ausgeliefert wird. Es ergibt sich ein unlösbarer Konflikt: entweder, man hat toten Code zur Laufzeit, oder man führt Tests nicht auf genau der Software aus, die letzten Endes in den Produktivbetrieb geht.

Es ist daher Aufgabe der vorliegenden Erfindung ein verbessertes Verfahren zum Testen von Computerprogrammen anzugeben, mit dem auf das Einfügen von Programmelementen in den Programmcode ausschließlich zum Zweck des Erstellens von Testszenarien verzichtet werden kann.

Die Aufgabe wird mit dem Verfahren gemäß Anspruch 1 erfindungsgemäß gelöst. Vorteilhafte Ausgestaltungen der Erfindung finden sich dann in den entsprechenden Unteransprüchen.

Gemäß Anspruch 1 wird ein Verfahren zum Testen eines Computerprogramms mit einer graphischen Benutzeroberfläche, wobei das Verfahren gattungsgemäß die folgenden Schritte umfasst:
- Bereitstellen einer Datenverarbeitungsanlage, die eine elektronische Recheneinheit, eine Anzeigeschnittstelle, über die eine Anzeigevorrichtung verbunden oder verbindbar ist, und eine Eingabeschnittstelle hat, über die eine Eingabevorrichtung für Benutzereingaben verbunden oder verbindbar ist;
- Ausführen des zu testenden Computerprogramms auf der Datenverarbeitungsanlage, wobei durch das Computerprogramm an der Anzeigeschnittstelle der Datenverarbeitungsanlage kontinuierlich ein Bilddatenstrom mit einer eine Mehrzahl von Objekten aufweisende graphische Benutzeroberfläche bereitgestellt wird.

Erfindungsgemäß ist nun vorgesehen, dass eine Testumgebung mit wenigstens einem Testszenario bereitgestellt wird, welches ein Systemverhalten des zu testenden Computerprogramms mit Bedienung wenigstens eines Bedienelementes der graphischen Benutzeroberfläche beinhaltet,
- wobei der Testumgebung über die Anzeigeschnittstelle der Datenverarbeitungseinrichtung zusätzlich zu dem ersten Bilddatenstrom für die Anzeigevorrichtung ein zweiter Bilddatenstrom bereitgestellt wird,
- wobei mittels einer optischen Zeichenerkennung in der über den zweiten Bilddatenstrom bereitgestellten graphischen Benutzeroberfläche durch eine Eingabevorrichtung bedienbare Bedienelemente als ein Objekt der graphischen Benutzeroberfläche erkannt werden,
- wobei ein Eingabesignal durch die Testumgebung in Abhängigkeit von dem Testszenario und dem erkannten Bedienelement generiert wird, wenn das entsprechende Bedienelement in der graphischen Benutzeroberfläche zuvor erkannt wurde, und
- wobei das generierte Eingabesignal an der Eingabeschnittstelle der Datenverarbeitungsanlage bereitgestellt wird, um eine simulierte Benutzereingabe zum Testen des Computerprogramms auszulösen.

Demnach wird zunächst eine Datenverarbeitungsanlage bereitgestellt, auf der das zu testende Computerprogramm ausgeführt werden soll. Wenn das Computerprogramm auf der Datenverarbeitungsanlage ausgeführt wird, entsteht somit ein SuT, d. h. ein "System unter Test". Die Datenverarbeitungsanlage weist gattungsgemäß eine elektronische Recheneinheit auf, die unter anderem eine zentrale Verarbeitungseinheit (CPU) hat, mit der das Computerprogramm ausgeführt wird. Des Weiteren werden an die Datenverarbeitungsanlage über entsprechende Schnittstellen Peripheriegeräte angeschlossen, um Eingaben für die elektronische Recheneinheit bereitzustellen und Ausgaben auf einer Anzeigevorrichtung auszugeben. Hierfür hat die Datenverarbeitungsanlage eine Anzeigeschnittstelle, der entsprechende Bilddaten bereitgestellt werden können, um diese auf einer mit der Anzeigeschnittstelle verbundenen Anzeigevorrichtung auszugeben. Des Weiteren hat die Datenverarbeitungsanlage eine Eingabeschnittstelle, um über diese entsprechende Eingaben einer Eingabevorrichtung (beispielsweise Maus, Tastatur, Touchscreen, etc.) zu empfangen und an die elektronische Recheneinheit weiterzuleiten. Die Eingaben werden dabei von den Computerprogramm verarbeitet, woraufhin die Ausgaben auf der Anzeigevorrichtung (beispielsweise Display) ausgegeben und gegebenenfalls angepasst werden.

Um das Computerprogramm nun zu testen, wird dieses auf der Datenverarbeitungsanlage ausgeführt, wodurch über die Anzeigeschnittstelle der Datenverarbeitungsanlage kontinuierlich ein Bilddatenstrom bereitgestellt wird, der dann als graphische Benutzeroberfläche auf einer Anzeigevorrichtung angezeigt werden kann, sofern eine verbunden ist. Dieser Bilddatenstrom wird beispielsweise mit einer vorgegebenen Bildwiederholungsfrequenz bereitgestellt, vorzugsweise mit einer Frequenz der Anzeigevorrichtung. Es ist jedoch nicht zwingend erforderlich, dass tatsächlich eine Anzeigevorrichtung an der Anzeigeschnittstelle verbunden ist, um das Verfahren auszuführen. Es ist ebenfalls nicht zwingend erforderlich, dass tatsächlich eine Eingabevorrichtung an der Eingabeschnittstelle verbunden ist, um das Verfahren auszuführen.

Das zu testende Computerprogramm weist dabei besonders bevorzugterweise keine Programmelemente auf, die eine Schnittstelle bilden, um mithilfe eines weiteren Testprogramms das Computerprogramm zu testen. Vielmehr wird das Computerprogramm erfindungsgemäß mit dem nachstehenden Ablauf getestet.

Zunächst eine Testumgebung bereitgestellt, die das zu testende Computerprogramm Testen soll. Diese Testumgebung kann dabei ebenfalls ein Computerprogramm sein, welches beispielsweise auf der Datenverarbeitungsanlage ausgeführt wird. Die Testumgebung hat wenigstens ein Testszenario, welches ein Systemverhalten des zu testen Computerprogramms einschließlich einer Bedienung wenigstens eines Bedienelementes der graphischen Benutzeroberfläche beinhaltet. Im einfachsten Fall umfasst das Testszenario demnach die Bedienung wenigstens eines Bedienelementes der graphischen Benutzeroberfläche sowie den spezifizierten und zu erwartenden Zustand der graphischen Benutzeroberfläche nach der Bedienung des Bedienelementes. Es sind aber auch weitaus komplexere Testszenarien denkbar. Zum Testen des Computerprogramms bzw. SuT wird nun das Testszenario insbesondere schrittweise ausgeführt. Hierfür weist das Testszenario in der Regel einzelne Testteile bzw. Testanweisungen auf, die einzeln nacheinander abgearbeitet werden können, wobei das Ergebnis einer vorherigen Testanweisung in die Abarbeitung der nachfolgenden Testanweisung einfließen kann.

Hierfür wird zunächst der Testumgebung ein zweiter Bilddatenstrom bereitgestellt, der von der Anzeigeschnittstelle der Datenverarbeitungseinrichtung abgegriffen werden kann. Dieser zweite Bilddatenstrom ist dabei parallel zu dem ersten Bilddatenstrom, der an die Anzeigevorrichtung zur Darstellung der graphischen Benutzeroberfläche gesendet wird. Die Testumgebung erhält somit eine Kopie der aktuellen Darstellung auf der Anzeigevorrichtung.

Als nächstes wird mithilfe einer optischen Zeichenerkennung die grafische Benutzeroberfläche, die der Testumgebung über den zweiten Bilddatenstrom bereitgestellt wurde, analysiert. Neben dem Erkennen von statischen Informationen (Datenfelder, Labels, etc.) sollen hier insbesondere bedienbare Bedienelemente (Buttons, DropDown-Menüs, Textfelder, Checkboxen, etc...) erkannt werden, insbesondere jene Bedienelemente, die in dem Testszenario enthalten sind und somit Teil der Definition des Systemverhaltens sind. Es werden dabei nicht nur die Bedienelemente an sich erkannt, sondern insbesondere auch deren Position innerhalb der graphischen Benutzeroberfläche, was mithilfe eines zweidimensionalen Koordinatendatums der Anzeigevorrichtung abgebildet werden kann.

Die optische Zeichenerkennung kann dabei derart hergerichtet sein, dass sie im Vorfeld einen Kontext erhält, welche Objekte und insbesondere welche die Objekte kennzeichnenden Zeichenketten identifiziert werden sollen und ggf. welche Eigenschaften diese Objekte besitzen.

Demnach wird mittels der optischen Zeichenerkennung in der über den zweiten Bilddatenstrom bereitgestellten graphischen Benutzeroberfläche durch die Eingabevorrichtung bedienbare Bedienelemente in Abhängigkeit von dem in dem Testszenario enthaltenen Bedienelement erkannt.

Anschließend wird überprüft, ob das Bedienelement, welches in dem Testszenario ausgelöst bzw. bedient werden soll, durch die optische Zeichenerkennung in der graphischen Benutzeroberfläche erkannt wurde. Hierbei wird vorzugsweise eine Zuordnung durchgeführt, bei der versucht wird, jedem in der grafischen Benutzeroberfläche erkannten Objekt einem Objekt in dem Testszenario zuzuordnen. Sowohl die Objekte in der graphischen Benutzeroberfläche als auch die Objekte in den Testszenarien sind dabei durch entsprechende Zeichenketten definiert, sodass die Zuordnung über die Zeichenketten erfolgt. Das bedeutet, dass eine in der graphischen Benutzeroberfläche erkannte Zeichenkette, die ein entsprechendes Objekt innerhalb der graphischen Benutzeroberfläche gekennzeichnet, einer Zeichenkette in dem Testszenario zugeordnet wird, die dort ein entsprechendes Objekt innerhalb des Testszenarios definiert. Eine solche Zuordnung kann, wie später noch dargelegt wird, mithilfe eines großen Sprachmodelles erfolgen, so dass die Definitionen in den Testszenarien syntaktisch von den Objekten in der graphischen Benutzeroberfläche abweichen können.

Wurde ein solches Bedienelement aus dem Testszenario in der graphischen Benutzeroberfläche erkannt, so wird ein Eingabesignal durch die Testumgebung basierend auf dem in dem Testszenario spezifizierten Systemverhalten generiert. In einem einfachsten Fall kann es sich beispielsweise um einen Mausklick auf das entsprechende Bedienelement handeln.

Das generierte Eingabesignal entspricht dabei einem Signal einer Eingabevorrichtung, mit der Eingaben in der Datenverarbeitungsanlage ausgelöst werden können. Dieses Eingabesignal kann dabei der Eingabeschnittstelle der Datenverarbeitungsanlage bereitgestellt werden, um so eine Eingabe zu generieren. Das generierte Eingabesignal stammt aber nicht von einer tatsächlichen Eingabevorrichtung (beispielsweise Maus oder Tastatur), sondern wurde basierend auf dem Systemverhalten des Testszenarios virtuell generiert und wird nun der Eingabeschnittstelle der Datenverarbeitungsanlage bereitgestellt, um so eine simulierte Benutzereingabe zum Testen des Computerprogramms auszulösen.

Durch das generierte Eingabesignal wird somit die Bedienung des Bedienelementes auf der graphischen Benutzeroberfläche simuliert, ohne dass tatsächlich eine Eingabe durch die Eingabevorrichtung durch einen physischen Benutzer notwendig wird. Vielmehr erfolgt die Bedienung des Bedienelementes rein aus der Testumgebung heraus durch das Bereitstellen des generierten Eingabesignals an der Eingabeschnittstelle.

Durch die simulierte Bedienung des Bedienelementes auf der graphischen Benutzeroberfläche wird eine Reaktion des Computerprogramms ausgelöst, die zu einer Veränderung der graphischen Benutzeroberfläche führt. In einem zeitlichen nachgelagerten Schritt kann dann durch Analyse des zweiten Bilddatenstroms die sich veränderte grafische Benutzeroberfläche wieder analysiert werden und mit dem spezifizierten Systemverhalten in dem Testszenario verglichen werden, um so festzustellen, ob sich das Computerprogramm gemäß dem spezifizierten Testszenario verhält oder nicht.

Mithilfe der vorliegenden Erfindung wird es somit möglich, ein Computerprogramm (SuT) zu testen, ohne entsprechende Programmelemente in das Computerprogramm integrieren zu müssen. Vielmehr kann das Computerprogramm ohne Rücksicht darauf entwickelt werden, wobei die Spezifikation des Testszenarios dann von Personen mit der entsprechenden Expertise durchgeführt wird, ohne dass Kenntnisse vom Testen solcher Computerprogramme erforderlich sind.

Hierdurch lassen sich Kosten bei der Entwicklung der Computerprogramme reduzieren und gleichzeitig grafische Benutzeroberflächen zu einem frühestmöglichen Zeitraum testen, ohne dass diese dann in einem Betatest im Feld durch die entsprechenden späteren Anwender getestet werden müssen. Hierdurch reduziert sich die Anzahl der Feedback-Schleifen, wodurch der Änderungsaufwand reduziert und die Akzeptanz der Software erhöht wird.

Gemäß einer Ausführungsform ist vorgesehen, dass mittels der optischen Zeichenerkennung auch ein durch Koordinaten beschreibbarer Bedienbereich des erkannten bedienbaren Bedienelementes in der bereitgestellten graphischen Benutzeroberfläche ermittelt wird, innerhalb dessen das bedienbare Bedienelement durch eine Benutzereingabe an der Eingabevorrichtung ausgelöst werden kann, wobei das Eingabesignal weiterhin in Abhängigkeit von dem durch ermittelten Bedienbereich generiert wird.

Hierdurch wird nicht nur das Bedienelement als solches identifiziert, sondern auch der Bedienbereich, innerhalb dessen das Bedienelement auf der graphischen Benutzeroberfläche bedient und somit eine Aktion ausgelöst werden kann. Der Bedienbereich ist dabei vorzugsweise ein zweidimensionaler Bereich, der durch die Fläche und Position innerhalb der graphischen Benutzeroberfläche definiert wird.

Gemäß einer Ausführungsform ist vorgesehen, dass die Testumgebung auf der Datenverarbeitungsanlage oder auf einer mit der Datenverarbeitungsanlage verbundenen externen Vorrichtung ausgeführt wird.

Bei der Testumgebung handelt es sich um ein zu dem zu testenden Computerprogramm separates, zweites Computerprogramm, welches auf einer Datenverarbeitungsanlage ausgeführt wird und das zu testende Computerprogramm gemäß dem Testszenario testet. Die Testumgebung kann somit auf der Datenverarbeitungsanlage ausgeführt werden, auf der auch das zu testende Computerprogramm ausgeführt wird. Denkbar ist aber auch, dass die Testumgebung auf einer separaten, zweiten Datenverarbeitungsanlage ausgeführt wird und mit der ersten Datenverarbeitungsanlage, auf der das zu testende Computerprogramm ausgeführt wird, verbunden ist. Die Verbindung ist notwendig, um an der Anzeigeschnittstelle den zweiten Bilddatenstrom abzugreifen und um über die Eingabeschnittstelle das generierte Eingabesignal der ersten Datenverarbeitungsanlage bereitzustellen, sodass eine simulierte Benutzereingabe ausgelöst werden kann.

Gemäß einer Ausführungsform ist vorgesehen, dass mittels der optischen Zeichenerkennung in der über den zweiten Bilddatenstrom bereitgestellten graphischen Benutzeroberfläche dargestellte Informationen erkannt werden, wobei die in der graphischen Benutzeroberfläche erkannten Informationen in Abhängigkeit von dem durch das Testszenario beschriebenen Systemverhalten validiert werden.

Hierdurch lassen sich insbesondere statische Informationen, die auf der graphischen Benutzeroberfläche angezeigt werden und sich während der Ausführung des Computerprogramms nicht oder nur aufgrund einer Bedienung ändern, mit den Angaben innerhalb des Testszenario (und insbesondere das dadurch definierte Systemverhalten) validieren. Dadurch kann sichergestellt werden, dass die grafische Benutzeroberfläche die spezifizierten Information anzeigt, die auch in dem Testszenario entsprechend angegeben sind.

Es lassen sich aber auch veränderbare Darstellungen der graphischen Benutzeroberfläche validieren, beispielsweise dann, wenn durch das generierte Eingabesignal eine Aktion ausgeführt wird und diese Aktion zu einer Veränderung der graphischen Benutzeroberfläche führt.

Gemäß einer Ausführungsform hierzu ist vorgesehen, dass die Informationen erkannt und validiert werden, nachdem die simulierte Bedienung des entsprechenden Bedienelementes in der graphischen Benutzeroberfläche ausgelöst wurde.

In diesem Fall wird die grafische Benutzeroberfläche nach dem Auslösen der Benutzereingabe durch eine simulierte Bedienung des Bedienelementes, welches in dem Testszenario spezifiziert ist, verändert, was eine Reaktion auf die Bedienung des Bedienelementes ist. Diese Veränderung der graphischen Benutzeroberfläche nach der simulierten Bedienung des Bedienelementes wird dann durch die Analyse mittels der optischen Zeichenerkennung und dem in dem Testszenario spezifizierten Systemverhalten validiert.

Gemäß einer weiteren Ausführungsform hierzu ist vorgesehen, dass die simulierte Bedienung des entsprechenden Bedienelementes in der graphischen Benutzeroberfläche ausgelöst wird, nachdem die Information erkannt und validiert wurde.

In diesem Fall wird gemäß dem Testszenario zunächst überprüft, ob die grafische Benutzeroberfläche dem in dem Testszenario spezifizierten Systemverhalten entspricht, wobei daraufhin das entsprechende Bedienelement durch das Generieren des Eingabesignals bedient wird. In Verbindung mit der vorherigen Ausführungsform lässt sich anschließend dann die Reaktion des Computerprogramms auf die Bedienung des Bedienelementes anhand der Veränderung der graphischen Benutzeroberfläche validieren.

Hierdurch wird ein vollständiger Test mit Voraussetzung, Bedienung und Reaktion möglich, ohne dass das Computerprogramm entsprechende Integrierte Programmelement benötigt.

Gemäß einer Ausführungsform ist vorgesehen, dass das Testszenario derart bereitgestellt wird, dass das dadurch beschriebene Systemverhalten mittels natürlicher Sprache definiert ist, wobei durch die Testumgebung das in natürlicher Sprache definierte Systemverhalten mittels eines Parsers in eine maschinelle Beschreibung des Systemverhaltens umgesetzt wird.

Durch die Beschreibung des Systemverhaltens mittels natürlicher Sprache wird es möglich, dass das Erstellen des Testszenarios durch jene Personen möglich wird, die in der jeweiligen Branche als Experten angesehen werden, ohne dass diese hierfür entsprechende Kenntnisse von der Entwicklung eines Computerprogramms benötigen. Der Parser ist dabei so ausgebildet, dass er das in natürlicher Sprache definierte Systemverhalten in eine maschinelle Beschreibung des Systemverhaltens umsetzt, was dann durch die Testumgebung entsprechend ausgeführt wird.

Ein solches Testszenario kann beispielsweise durch Domänenexperten und Auftraggeber spezifiziert werden und kann dabei aus einzelnen Schritten, die in Form von Prosa formuliert werden, bestehen. Dabei können entsprechende Präfixwörter für jeden einzelnen Schritt verwendet werden, um das Parsen des so spezifizierten Testszenario zu vereinfachen und prozesssicher zu gestalten.

Solche Testszenarien und sind dann menschenlesbar und somit sowohl für den Auftraggeber als auch den Domänenexperten nachvollziehbar, ohne dass diese Kenntnis von der Programmierung haben. Dabei können auch Platzhalter verwendet werden, die in einer lokalen Variable gespeichert werden. Der Parser übersetzt dies dann in eine maschinelle Beschreibung des Systemverhaltens, sodass das Testszenario dann durch die Testumgebung schrittweise ausgeführt werden kann. Vorzugsweise wird dabei die grafische Benutzeroberfläche nach jedem einzelnen Schritt validiert.

Gemäß einer Ausführungsform hierzu ist vorgesehen, dass mittels der optischen Zeichenerkennung zunächst Zeichenketten der in der graphischen Benutzeroberfläche enthaltenen Objekte erkannt, wobei anschließend die in dem Testszenario das Systemverhalten beschreibenden Objekte den entsprechenden Objekten innerhalb der graphischen Benutzeroberfläche in Abhängigkeit von den erkannten Zeichenketten der in der graphischen Benutzeroberfläche enthaltenen Objekte zugeordnet werden.

Gemäß dieser Ausführungsform werden auf der graphischen Benutzeroberfläche zunächst mithilfe der optischen Zeichenerkennung die entsprechenden Zeichenketten (d. h. im Allgemeinen Buchstaben und Zahlen) erkannt und in eine entsprechende textuelle, transkribierte Form gebracht. Anschließend werden dann diese erkannten Zeichenketten, die zu den entsprechenden Objekten innerhalb der angezeigten graphischen Benutzeroberfläche gehören, mit den Objekten des Testszenario, die das Systemverhalten während des Testszenarios beschreiben, verglichen, um so eine Zuordnung der Objekte innerhalb der graphischen Benutzeroberfläche mit den das Systemverhalten beschreibenden Objekten innerhalb des Testszenario zu bewirken. Ist eine solche Zuordnung möglich und erfolgt, kann die Testumgebung das Testszenario entsprechend ausführen, da es nun die Bedienelemente entsprechend ansteuern und die Veränderung auf der graphischen Benutzeroberfläche überwachen kann.

Gemäß einer Ausführungsform ist vorgesehen, dass unter Verwendung eines mit der Testumgebung über eine Datenschnittstelle verbundenes großen Sprachmodells (Large Language Model, LLM) die Zuordnung der Objekte des Testszenarios mit den entsprechenden Objekten innerhalb der graphischen Benutzeroberfläche erfolgt.

Große Sprachmodelle sind Sprachmodelle, die Texte aus natürlicher Sprache zum Teil auch hinsichtlich der Semantik analysieren können. Diese werden insbesondere mithilfe großer Mengen von Datenmengen gelernt, insbesondere mit Texten aus natürlicher Sprache. Dem großen Sprachmodell werden dabei die erkannten Zeichenketten sowie die Objekte innerhalb des Testszenarios als Eingang bereitgestellt, wobei das große Sprachmodell dann eine Wahrscheinlichkeit einer Zuordnung einer Zeichenkette zu einem Objekt innerhalb des Testszenarios ausgibt.

Die Objekte des Testszenario werden in dem Testszenario ebenfalls durch Zeichenketten definiert, wobei im besten Fall exakt die Zeichenkette des Objektes in dem Testszenario sich in der graphischen Benutzeroberfläche erkennen lässt. Die Verwendung eines großen Sprachmodells hat darüber hinaus den Vorteil, dass auch leichte Abwandlungen der Zeichenketten zwischen grafischer Benutzeroberfläche und Testszenario erkannt werden, wodurch die Erstellung der Testszenarien vereinfacht wird und somit auch durch Auftraggeber und Dritte erstellt werden können, die keine tiefen Einblicke in die Programmierung der graphischen Benutzeroberfläche haben.

Ein solches großes Sprachmodell kann dabei ein künstliches neuronales Netz zugrunde gelegt werden, welches mit entsprechenden Datenmengen gelernt wurde. Ein solches großes Sprachmodell kann dabei beispielsweise genauso gelernt worden sein wie die bekannten LLMs, die bspw. unter dem Handelsnamen "ChatGPT" oder "OpenAI" bekannt sind. Bei dem großen Sprachmodell handelt es sich um ein computerlinguistisches Wahrscheinlichkeitsmodell, das statistische Wort- und Satzfolgebeziehungen aus einer Vielzahl von Textdokumenten durch einen Trainingsprozess erlernt.

Dabei können einzelne Wörter, Wortgruppen oder das ganze Testszenario als Eingabedaten in das große Sprachmodell eingegeben werden sowie ein oder mehrere erkannte Zeichenketten der graphischen Benutzeroberfläche, wobei das große Sprachmodell dann eine Wahrscheinlichkeit einer Zuordnung eine erkannten Zeichenkette der graphischen Benutzeroberfläche zu einzelnen Wörtern oder Wortgruppen des Testszenario als Ausgabedaten ausgibt. Basierend auf diesen Wahrscheinlichkeiten erfolgt dann eine entsprechende Zuordnung der in den Testszenarien durch Zeichenketten definierten Objekte mit den durch Zeichenketten in der graphischen Benutzeroberfläche definierten Objekten.

Gemäß einer Ausführungsform ist vorgesehen, dass zumindest die in der graphischen Benutzeroberfläche erkannten bedienbaren Bedienelemente und zumindest ein Teil des in dem Testszenario beschriebenen Systemverhaltens als Eingabedaten in ein mit der Testumgebung über eine Datenschnittstelle verbundenes großes Sprachmodell (Large Language Model, LLM) mit der Maßgabe eingegeben werden, eine Handlungsoption für die Bedienung wenigstens eines Bedienelementes der graphischen Benutzeroberfläche an der Datenschnittstelle zu erhalten, wobei das Eingabesignal dann durch die Testumgebung in Abhängigkeit von der an der Datenschnittstelle bereitgestellten Handlungsoption zum Bedienen mindestens eines erkannten Bedienelementes generiert wird.

Demnach werden in ein über die Datenschnittstelle verbundenes großes Sprachmodell mindestens die erkannten Bedienelemente sowie Teile des Testszenarios (vorzugsweise die aktuell abzuarbeitende Testanweisung) als Eingabedaten eingegeben, wobei das große Sprachmodell dann eine Handlungsoption als Ausgabe bereitstellt. Die Handlungsoption beinhaltet dabei insbesondere die Bedienung eines entsprechenden Bedienelementes. Dies wird dann von der Testumgebung interpretiert und in ein entsprechendes Eingabesignal umgewandelt, um eine simulierte Benutzereingabe auszulösen.

Die Erfindung wird anhand der beigefügten Figuren beispielhaft näher erläutert. Es zeigen:
- Figur 1: schematische Darstellung eines zu testenden Systems mit Testumgebung;
- Figur 2: schematische Darstellung des erfindungsgemäßen Testablaufes.

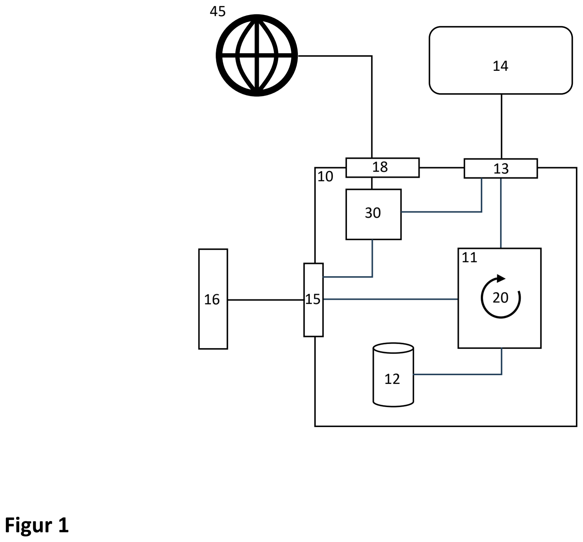

Figur 1 zeigt eine Datenverarbeitungsanlage 10, die eine elektronische Recheneinheit 11 und einen Datenspeicher 12 (volatil und non-volatil) hat. Auf der Recheneinheit 11 wird ein Computerprogramm 20 ausgeführt, welches mit den Elementen der Datenverarbeitungsanlage 10 interagiert.

Die Datenverarbeitungsanlage 10 weist einer Anzeigeschnittstelle 13 auf, über die eine Anzeigevorrichtung 14 angeschlossen ist, sodass das Computerprogramm 20 eine entsprechende grafische Ausgabe über die Anzeigeschnittstelle 13 auf der Anzeigevorrichtung 14 ausgeben kann. Eine solche grafische Ausgabe ist eine grafische Benutzeroberfläche.

Die Datenverarbeitungsanlage 10 weist des Weiteren eine Eingabeschnittstelle 15 auf, über die eine Eingabevorrichtung 16 angeschlossen ist. Mithilfe der Eingabevorrichtung 16 können dabei Eingaben für das Computerprogramm 20 generiert und diesen entsprechend bereitgestellt werden, sodass hierüber eine Interaktion mit dem Computerprogramm 20 möglich wird. Basierend auf der Interaktion und den Eingaben, die über die Eingabevorrichtung 16 erzeugt werden, kann dann die Ausgabe auf der Anzeigevorrichtung 14 entsprechend angepasst werden, was ebenfalls von Computerprogramm 20 initiiert wird. Solche Eingabevorrichtungen 16 können dabei beispielsweise eine Maus, eine Tastatur, bedient Knöpfe und/oder Touchdisplays sein.

Des Weiteren wird von der Datenverarbeitungsanlage 10 erfindungsgemäß eine Testumgebung 30 bereitgestellt, die in Figur 1 als Bestandteil der Datenverarbeitungsanlage 10 dargestellt wird. Es kann sich hierbei beispielsweise ebenfalls um ein auf der Recheneinheit 11 ablaufen des Computerprogramms handeln. Denkbar ist aber auch, dass es sich um ein externes Gerät handelt, welches über eine Schnittstelle (nicht dargestellt) mit der Datenverarbeitungsanlage 10 verbunden ist.

Die Testumgebung 30 ist dabei sowohl mit der Anzeigeschnittstelle 13 als auch mit der Eingabeschnittstelle 15 verbunden. Von der Anzeigeschnittstelle 13 erhält die Testumgebung eine Kopie des aktuellen Bilddatenstrom, der zur Anzeige auf der Anzeigevorrichtung 14 führt. Von der Eingabeschnittstelle 15 erhält die Testumgebung 30 die entsprechenden Eingaben, die an der Eingabevorrichtung 16 zur Interaktion mit dem Computerprogramm 20 eingegeben wurden.

Die Verbindung zwischen der Testumgebung 30 und der Eingabeschnittstelle 15 ist dabei bidirektional, sodass die Testumgebung 30 nicht nur eine Kopie der Eingaben von der Eingabevorrichtung 16 erhält, die an das Computerprogramm 20 weitergeleitet werden, sondern auch selber Eingabesignale an der Eingabeschnittstelle 15 bereitstellen kann, um so eine Interaktion mit dem Computerprogramm 20 auslösen zu können.

Die Testumgebung 30 ist des Weiteren über eine Datenschnittstelle 18 mit einem großen Sprachmodell 45 verbunden, um mit diesem zu interagieren und durch Eingabe von Anweisungen, Informationen und erkannten bedient Elementen eine Handlungsoption für die Bedienung des zu testenden Computerprogramms zu erhalten.

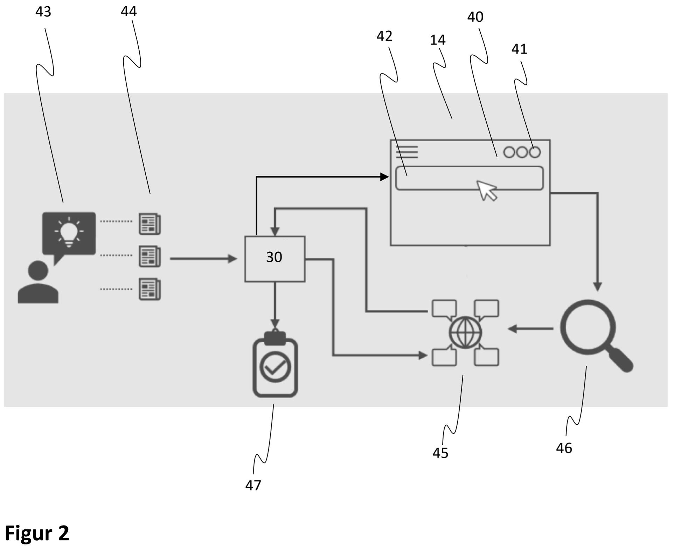

Figur 2 zeigt schematisch den durch die Testumgebung ausgeführten Verfahrensablauf am Beispiel eines Computerprogramms aus der Luftfahrt. Dieses zu testende Computerprogramm erzeugt dabei auf einer Anzeigevorrichtung 14 (siehe Figur 1) eine grafische Benutzeroberfläche 40, die hinsichtlich der Anforderungen überprüft und validiert werden soll. Diese Benutzeroberfläche weist mehrere graphische Objekte 41, 42 auf, mit denen ein Benutzer des Computerprogramms durch entsprechende Eingaben an einer Eingabevorrichtung interagieren kann. Ein solches grafisches Objekt 42 der graphischen Benutzeroberfläche 40 kann beispielsweise ein Button sein, der durch eine Maus oder ein Touchdisplay oder eine Tastenkombination bedient werden kann.

Im Ausführungsbeispiel der Figur 2 sei das grafische Objekt 42 der graphischen Benutzeroberfläche 40 ein Button, der mit der Zeichenkette "Route" gekennzeichnet ist. Wird dieses grafische Objekt 42 durch eine Eingabe bedient, so soll eine Aktion ausgeführt werden, bei der sämtlichen Wegpunkte des Flugzeugs angezeigt werden sollen.

Um dies zu testen, werden zunächst von einem Branchenexperten, Domänenexperten oder dem Auftraggeber 43 verschiedene Testszenarien 44 erzeugt, die der Testumgebung 30 bereitgestellt werden. Die Testumgebung 30 umfasst eine optische Zeichenerkennung 46 sowie einer Ausgabe 47 und ist über eine entsprechende Schnittstelle auch mit einem großen Sprachmodell 45 kommunizierend verbunden.

Die Testszenarios 44 enthalten dabei das erwartete Systemverhalten des Computerprogramms hinsichtlich seiner graphischen Benutzeroberfläche 40 und sind in Form von Prosa menschenlesbar formuliert. Ein solches Szenario könnte beispielsweise wie folgt formuliert sein:
Szenario: Zeige Route
Gegeben der Flugmanagementcomputer ist in der Hauptansicht
Wenn der Route-Button wird betätigt
Dann alle Wegepunkte werden angezeigt

Bei diesem Szenario wird überprüft, ob beim Betätigen des Route-Button die gewünschte Aktion, nämlich dass alle Wegpunkte auf dem Flugmanagementcomputer (Flight Management Computer) angezeigt werden, von dem Computerprogramm ausgeführt wird. Die Voraussetzung für diese Aktion wird dabei in der ersten Zeile definiert, nämlich dass der Flugmanagementcomputer in der Hauptansicht ist.

Durch die bekannten Präfixe "Gegeben, Wenn, Dann" kann die Testumgebung 30 nun mithilfe eines Parsers dieses so in natürlicher Sprache formulierte Testszenario in eine maschinenlesbare Beschreibung des Systemverhaltens überführen. Hierbei werden die entsprechenden Objekte, wie beispielsweise der "Route-Button", identifiziert.

Zur Durchführung des Testablaufes wird nun das Computerprogramm gestartet, sodass die grafische Benutzeroberfläche 40 auf der Anzeigevorrichtung 14 angezeigt wird. Mithilfe der optischen Zeichenerkennung 46 wird nun diese graphische Ausgabe analysiert und entsprechenden Zeichenketten auf der graphischen Benutzeroberfläche erkannt. Diese Zeichenketten gehören dabei zu entsprechenden Objekten 41, 42 auf der graphischen Benutzeroberfläche 40, wie beispielsweise die Zeichenkette "Route" des Buttons 42. gleichzeitig wird auch der entsprechende Bereich identifiziert, innerhalb dessen das Objekt auf Bedieneingaben reagiert.

Sowohl die erkannten Zeichenketten aus der optischen Zeichenerkennung 46 als auch das entsprechende Testszenario, welches von der Testumgebung 30 ausgeführt wird, werden nun einem großen Sprachmodell 45 bereitgestellt, um eine Zuordnung der erkannten Zeichenketten auf der graphischen Benutzeroberfläche mit den entsprechenden Objekten aus den Testszenarien zu erhalten. Das große Sprachmodell 45 kann dabei eine Handlungsoption liefern derart, dass es die Bedienung des Route-Button in der erkannten graphischen Oberfläche vorschlägt.

Im oben genannten Beispiel würde so die erkannten Zeichenkette "Route" des Buttons 42 mit der erkannten Zeichenkette "Route" aus dem Testszenario zugeordnet, sodass die Testumgebung 30 das aus dem Testszenario stammende Objekt "Route" dem Button 42 in der graphischen Benutzeroberfläche zuordnen kann.

Danach wird das Testszenario ausgeführt. Dies soll anhand des oben beispielhaft gezeigten Testszenario gezeigt werden. Zunächst wird überprüft, ob die Voraussetzungen, nämlich dass sich die grafische Benutzeroberfläche in der Hauptansicht befindet, überprüft. Dies kann beispielsweise dadurch geschehen, dass bestimmte grafische Elemente bzw. Objekte definiert werden, die in der Hauptansicht zwingend angezeigt werden müssen.

Anschließend wird die in der zweiten Zeile befindliche Aktion des Testszenario ausgeführt, nämlich das Bedienen des Buttons "Route". Hierzu generiert die Testumgebung ein Eingabesignal, welches die Bedienung des Buttons 42 simulieren soll. Das Eingabesignal beinhaltet dabei die durchzuführende Aktion, d. h. beispielsweise einen Mausklick sowie eine Koordinate innerhalb der graphischen Benutzeroberfläche, an der der Mausklick ausgelöst werden soll. Dieses Eingabesignal wird dann der Eingabeschnittstelle der Datenverarbeitungsanlage bereitgestellt, sodass diese ein Drücken des Buttons 42 initiiert.

Anschließend wird die sich verändernde grafische Benutzeroberfläche ein zweites Mal analysiert. Auch hier werden wieder entsprechende Zeichenketten und graphische Objekte erkannt, und dem Sprachmodell 45 bereitgestellt. Die Testumgebung 30 liefert nun die Zuerkennung der Wegpunkte notwendigen Zeichenketten, sodass das große Sprachmodell 45 feststellen kann, ob diese Elemente in der graphischen Benutzeroberfläche 40 enthalten sind oder nicht. Kann eine entsprechende Zuordnung durch das große Sprachmodell 45 festgestellt werden, so wird dies an die Testumgebung 30 entsprechend zurückgeliefert und über die Ausgabe 47 der Erfolg des Testszenario ausgegeben.

Durch die Verwendung eines großen Sprachmodell kann darüber hinaus eine Ungenauigkeit bei der Erstellung der Testszenarien ausgeglichen werden. Wird anstelle des Wortes "Route" das Wort "Routes" in dem Testszenario verwendet, so kann mithilfe des großen Sprachmodelle trotzdem eine entsprechende Zuordnung erreicht werden. Dadurch sinken die Anforderungen an die Person, die das Testszenario erstellt sowie an die Komplexität des Parsers.

Studien haben gezeigt, dass 80 % der Fehler in einer Benutzeroberfläche von den ersten drei bis vier Piloten in einer Nutzerstudie gefunden werden. Mithilfe der vorliegenden Erfindung wird es möglich, einen relevanten Anteil dieser Fehler bereits vorher aufzudecken, noch bevor kostbare Ressourcen aufgewendet werden müssen. Gleichzeitig kann die Effizienz einer Benutzerschnittstelle äquivalent zum Nutzer bestimmt werden. Dabei ist die Kopplung zwischen der zu testenden Software und der Testumgebung minimal, da kein direkter Eingriff in den Source Code der zu testenden Software notwendig ist.

### Bezugszeichenliste

- 10: Datenverarbeitungsanlage
- 11: elektronischen Recheneinheit
- 12: Datenspeicher
- 13: Anzeigeschnittstelle
- 14: Anzeigevorrichtung
- 15: Eingabeschnittstelle
- 16: Eingabevorrichtung
- 18: Datenschnittstelle
- 20: Computerprogramm (das zu testende)
- 30: Testumgebung
- 40: grafische Benutzeroberfläche
- 41: ein erstes Objekt der grafischen Benutzeroberfläche
- 42: ein zweites Objekt der grafischen Benutzeroberfläche
- 43: Ersteller des Testszenarios
- 44: Testszenarien
- 45: großes Sprachmodell
- 46: optische Zeichenerkennung
- 47: Testausgabe

## Patentansprüche

1. Verfahren zum Testen eines Computerprogramms (20) mit einer grafischen Benutzeroberfläche (40), wobei das Verfahren die folgenden Schritte umfasst:
- Bereitstellen einer Datenverarbeitungsanlage (10), die eine elektronische Recheneinheit (11), eine Anzeigeschnittstelle (13), über die eine Anzeigevorrichtung (14) verbunden oder verbindbar ist, und eine Eingabeschnittstelle (15) hat, über die eine Eingabevorrichtung (16) für Benutzereingaben verbunden oder verbindbar ist;
- Ausführen des zu testenden Computerprogramms (20) auf der Datenverarbeitungsanlage (10), wobei durch das Computerprogramm (20) an der Anzeigeschnittstelle (13) der Datenverarbeitungsanlage (10) kontinuierlich ein Bilddatenstrom mit einer eine Mehrzahl von Objekten aufweisende grafische Benutzeroberfläche (40) bereitgestellt wird; **dadurch gekennzeichnet, dass** eine Testumgebung (30) mit wenigstens einem Testszenario (44) bereitgestellt wird, welches ein Systemverhalten des zu testenden Computerprogramms (20) mit Bedienung wenigstens eines Bedienelementes der grafischen Benutzeroberfläche (40) beinhaltet,
- wobei der Testumgebung (30) über die Anzeigeschnittstelle (13) der Datenverarbeitungseinrichtung zusätzlich zu dem ersten Bilddatenstrom für die Anzeigevorrichtung (14) ein zweiter Bilddatenstrom bereitgestellt wird,
- wobei mittels einer optischen Zeichenerkennung (46) in der über den zweiten Bilddatenstrom bereitgestellten grafischen Benutzeroberfläche (40) durch eine Eingabevorrichtung (16) bedienbare Bedienelemente als ein Objekt der grafischen Benutzeroberfläche (40) erkannt werden,
- wobei ein Eingabesignal durch die Testumgebung (30) in Abhängigkeit von dem Testszenario (44) und dem erkannten Bedienelement generiert wird, wenn das entsprechende Bedienelement in der grafischen Benutzeroberfläche (40) zuvor erkannt wurde, und
- wobei das generierte Eingabesignal an der Eingabeschnittstelle (15) der Datenverarbeitungsanlage (10) bereitgestellt wird, um eine simulierte Benutzereingabe zum Testen des Computerprogramms (20) auszulösen.

2. Verfahren nach Anspruch 1, **dadurch gekennzeichnet, dass** mittels der optischen Zeichenerkennung (46) auch ein durch Koordinaten beschreibbarer Bedienbereich des erkannten bedienbaren Bedienelementes in der bereitgestellten grafischen Benutzeroberfläche (40) ermittelt wird, innerhalb dessen das bedienbare Bedienelement durch eine Benutzereingabe an einer Eingabevorrichtung (16) ausgelöst werden kann, wobei das Eingabesignal weiterhin in Abhängigkeit von dem durch ermittelten Bedienbereich generiert wird.

3. Verfahren nach Anspruch 1 oder 2, **dadurch gekennzeichnet, dass** die Testumgebung (30) auf der Datenverarbeitungsanlage (10) oder auf einer mit der Datenverarbeitungsanlage (10) verbundenen externen Vorrichtung ausgeführt wird.

4. Verfahren nach einem der vorhergehenden Ansprüche, **dadurch gekennzeichnet, dass** mittels der optischen Zeichenerkennung (46) in der über den zweiten Bilddatenstrom bereitgestellten grafischen Benutzeroberfläche (40) dargestellte Informationen als Objekte erkannt werden, wobei die in der grafischen Benutzeroberfläche (40) erkannten Informationen in Abhängigkeit von dem durch das Testszenario (44) beschriebenen Systemverhalten validiert werden.

5. Verfahren nach Anspruch 4, **dadurch gekennzeichnet, dass** die Informationen erkannt und validiert werden, nachdem die simulierte Bedienung des entsprechenden Bedienelementes in der grafischen Benutzeroberfläche (40) ausgelöst wurde.

6. Verfahren nach Anspruch 4 oder 5, **dadurch gekennzeichnet, dass** die simulierte Bedienung des entsprechenden Bedienelementes in der grafischen Benutzeroberfläche (40) ausgelöst wird, nachdem die Information erkannt und validiert wurden.

7. Verfahren nach einem der vorhergehenden Ansprüche, **dadurch gekennzeichnet, dass** das Testszenario (44) derart bereitgestellt wird, dass das dadurch beschriebene Systemverhalten mittels natürlicher Sprache definiert ist, wobei durch die Testumgebung (30) das in natürlicher Sprache definierte Systemverhalten mittels eines Parsers in eine maschinelle Beschreibung des Systemverhaltens umgesetzt wird.

8. Verfahren nach einem der vorhergehenden Ansprüche, **dadurch gekennzeichnet, dass** mittels der optischen Zeichenerkennung (46) zunächst Zeichenketten der in der grafischen Benutzeroberfläche (40) enthaltenen Objekte erkannt, wobei anschließend die in dem Testszenario (44) das Systemverhalten beschreibenden Objekte den entsprechenden Objekten innerhalb der grafischen Benutzeroberfläche (40) in Abhängigkeit von den erkannten Zeichenketten der in der grafischen Benutzeroberfläche (40) enthaltenen Objekte zugeordnet werden.

9. Verfahren nach Anspruch 8, **dadurch gekennzeichnet, dass** unter Verwendung eines mit der Testumgebung (30) über eine Datenschnittstelle (18) verbundenes großen Sprachmodells (45) (Large Language Model, LLM) die Zuordnung der Objekte des Testszenarios (44) mit den entsprechenden Objekten innerhalb der grafischen Benutzeroberfläche (40) erfolgt.

10. Verfahren nach einem der vorhergehenden Ansprüche, **dadurch gekennzeichnet, dass** zumindest die in der grafischen Benutzeroberfläche (40) erkannten bedienbaren Bedienelemente und zumindest ein Teil des in dem Testszenario (44) beschriebenen Systemverhaltens als Eingabedaten in ein mit der Testumgebung (30) über eine Datenschnittstelle (18) verbundenes großes Sprachmodell (45) (Large Language Model, LLM) mit der Maßgabe eingegeben werden, eine Handlungsoption für die Bedienung wenigstens eines Bedienelementes der grafischen Benutzeroberfläche (40) an der Datenschnittstelle (18) zu erhalten, wobei das Eingabesignal dann durch die Testumgebung (30) in Abhängigkeit von der an der Datenschnittstelle (18) bereitgestellten Handlungsoption zum Bedienen mindestens eines erkannten Bedienelementes generiert wird.

11. Computerprogramm (20) mit Programmcodemitteln, eingerichtet zur Durchführung des Verfahrens nach einem der vorhergehenden Ansprüche, wenn das Computerprogramm (20) als Testumgebung (30) auf einer Datenverarbeitungsanlage (10) ausgeführt wird.

12. System mit einer Datenverarbeitungsanlage (10), auf der ein zu testendes Computerprogramm (20) mit einer grafischen Benutzeroberfläche (40) ausführbar ist, und mit einer Testumgebung (30) zum Testen des ausgeführten Computerprogramms (20), wobei das System zur Durchführung des Verfahrens nach einem der Ansprüche 1 bis 10 eingerichtet ist, wenn das zu testende Computerprogramm (20) auf der Datenverarbeitungsanlage (10) ausgeführt wird.
